(19) Europäisches Patentamt
European Patent Office
Office européen des brevets

(11) EP 0 510 891 B1

## (12) EUROPEAN PATENT SPECIFICATION

(45) Date of publication and mention
of the grant of the patent:
**23.07.1997 Bulletin 1997/30**

(51) Int. Cl.$^6$: **B29C 59/10, H01T 19/00**

(21) Application number: **92303494.6**

(22) Date of filing: **16.04.1992**

(54) **Process for treating a tubular plastic film by corona discharge**

Verfahren zur Behandlung plastischer Schlauchfolien durch Korona-Entladung

Procédé pour traiter des gaines tubulaires plastiques par décharge en effet corona

(84) Designated Contracting States:
**CH DE ES FR GB LI NL SE**

(30) Priority: **22.04.1991 JP 117994/91**

(43) Date of publication of application:
**28.10.1992 Bulletin 1992/44**

(73) Proprietor: **KUREHA KAGAKU KOGYO KABUSHIKi KAISHA**
**Chuo-ku Tokyo 103 (JP)**

(72) Inventors:
• **Matsukura, Yoshihiro**
**Niihari-gun, Ibaraki-ken (JP)**
• **Kasai, Tadayoshi**
**Kawaguchi-shi, Saitama-ken (JP)**

• **Asano, Noriaki**
**Tsuchiura-shi, Ibaraki-ken (JP)**

(74) Representative: **Bedggood, Guy Stuart**
**Haseltine Lake & Co.,**
**Imperial House,**
**15-19 Kingsway**
**London WC2B 6UD (GB)**

(56) References cited:
WO-A-83/01021          WO-A-90/05757
DE-A- 1 778 810         DE-A- 2 458 499
FR-A- 1 483 490         FR-A- 1 515 327
GB-A- 2 009 033         JP-B-43 006 157
US-A- 3 734 849         US-A- 4 879 430

## Description

The present invention relates to a process for treating a tubular plastic film by corona discharge.

Plastic films, for example, films made of a polyvinylidene chloride resin are excellent in, for example, gas barrier property, heal shrinkability and transparency and, accordingly, they have been utilized generally as a food packaging material. Further, for improving the low temperature mechanical strength, the surface property, etc. of the film, multi-layered films having inner and the outer surfaces made of a polyolefin resin and a polyamide resin have also been used generally.

On the other hand, in the fabrication of meat such as ham and sausage, it is necessary that the meat as the content and the film as the casing have to be In an intimate adhesion with each other in view of the requirement for preservation, but the adhesion thereof can not be sufficient even in a case of using a polyvinylidene chloride resin and a polyolefin resin, as welt as a polyamide resin to the inner surface in adhesion with the meat. Further, there has been a problem that a printability is poor in a case of printing the outer surface of the tubular film with an aim of increasing the commercial value of the content.

Generally, as a method of improving the adhesion with meat and the printability of a plastic film, a corona discharge treatment has been adopted. For instance, a method of applying a corona discharge treatment to a tubular film having a gas sealed therein by running the film between at least a pair of electrodes has been disclosed in, for example, Japanese Patent Publication Sho 43-6157 (1968), Japanese Patent Publication Sho 61-24412 (1986) and Japanese Patent Laid-Open (KOKAI) Hei 2-13530 (1990). However, in the process of Japanese Patent Publication Sho 43-6157 (1968), since one bar-like electrode Is disposed apart from the tube surface, no effective corona treatment is applied to the inner surface of a thermoplastic resin tubular film opposed to the bar-like electrode and, in the process of GB-B-2009033, since the electrodes are in contact with the tube surface, no effective treatment is applied to the outer surface of the tubular film and no sufficient printability is obtained. Further, also in the process of GB-A-2242858, since the one electrode is disposed apart from the tube surface, effective treatment is not applied to the inner surface of the tube and electrode arrangement is complicated. Thus, the corona treatments of the prior art have advantages and disadvantages respectively and a process of applying effective treatment simultaneously to both of the inner and the outer surfaces of the tube has not yet been known.

Further, in the process as shown in Japanese Patent Publication Sho 43-6157 (1968), since it is necessary to keep the film from being in contact with the electrode on one side, the amount of a gas sealed in the tubular film was strictly controlled or the electrode gap was set somewhat broader.

However, even how the amount of the sealed gas is controlled or even if a member for positively flattening the film is used as shown in Japanese Patent Laid-Open (KOKAI) Hei 2-135230 (1992), it is inevitable to make the electrode gap somewhat broader in a high speed treatment, which necessitates a high voltage, as well as causes dense and coarse distribution in the corona resulting in unevenness in the treatment of the products to bring about a problem that the processing speed can not be increased.

US 4879430 discloses a method for selectively treating one side of a flat plastics film by corona discharge. This citation notes that uniform treatment of the film degrades the heat sealing properties and thus avoids the problem by leaving those areas which are to be heat sealed untreated.

GB 2009033 discloses a method for uniformly treating one side of a tubular plastics film by corona discharge. In this citation, the inner surface of the tubular film is treated in order to improve the adhesion of meaty substances to the film as compared with untreated films.

DE-A-1,778,810 discloses a method for the treatment of only the outer surface of a tubular film having a liquid (such as water) inside, by use of gas flame and corona discharge. The liquid contained within the tubular film prevents the build up of an electric field on the inside of the film.

DE-A-2,458,499 discloses a technique for the corona discharge treatment of both surfaces of a flat film using an electrode which is coated with a dielectric foam made up of two different materials. There is no disclosure in this citation of a process for the treatment of a tubular film on the inner and outer surfaces.

US-A-3,734,849 discloses an apparatus for the manufacture of sacks in which the outer surface of an elongated plastic tube having an ionizable gas inside the tube is treated, by moving the tube through a pretreating electric field while the inside surfaces of the tube are separated by an ionizable gas. The electric field is formed by corona discharge occurring between opposed electrodes, and the corona discharge is carried out while bringing the opposed electrodes into contact with the outer surfaces of a flattened tube film in which the gas is contained.

As described above, when the corona discharge treatment is applied while bringing the tubular film and both of the electrodes in contact with each other, the inner surface of the tube can be corona treated but the outer surface of the tube can not be treated effectively. On the other hand, when the corona discharge treatment is applied while disposing the tubular film and the electrodes apart from each other, the outer surface of the tubular film can be treated but the inner surface of the tubular film can not be treated effectively.

Therefore, in a case of packing meat or the like in a tubular plastic film and printing the outer surface of the tubular film, it has been desired to provide a process of applying a corona treatment simultaneously to both of the inner and the outer surfaces of the tubular film by using a simple electrode arrangement. The present inventors have made an earnest study for solving this problem and have attained the present invention on the finding that both of the inner and the outer surfaces of the tubular film can be treated at the same time to prepare a plastic tubular film having excellent printability and adhesion with meat by applying corona discharge while partially contacting or spacing both of at least a pair of electrodes to or from a tubular film, that is, by adopting such an electrode unit structure that a plurality of gaps containing gas are distributed in a region between a metal electrode and a tubular film.

The present invention seeks to provide a process for preparing a tubular plastic film in which the inner and the outer surface are treated simultaneously.

The present invention further seeks to provide a process capable of forming a stable corona discharge and capable of preparing homogeneous products with no unevenness in the treatment even at a high speed treatment.

According to the present invention there is provided a process for treating a tubular plastic film by corona discharge, in which the tubular plastic film having a gas retained therein, such that the inner surfaces of the film in at least one portion are not in contact, is run between at least one pair of opposite electrode units having a predetermined gap therebetween wherein the film is brought into contact with the electrode units and each electrode unit is a roll-shaped electrode unit and the predetermined gap is from 2 to 6 mm, wherein the electrode units include a plurality of pocket recesses or concavities at their surface, and each electrode unit is uniformly covered at the surface thereof with a woven fabric or mesh-like product made of insulators, and wherein the inner and outer surfaces of the film are simultaneously treated by corona discharge.

A particular embodiment of the invention is subject of the dependent claim 2.

In the present specification, a metal electrode having a plurality of concavities at the surface thereof is designated as an electrode unit and is distinguished from a metal electrode alone.

As the tubular plastic film of the present invention, thermoplastic resins are used. For instance, polyolefin such as high or low density polyethylene, LLDPE, ethylene-vinyl acetate copolymer and ionomer, vinylidene chloride resin, saponified ethylene-vinyl acetate copolymer, polyvinyl chloride, polyamide and thermoplastic polyester are used alone or in lamination. For food packaging use, vinylidene chloride resin, saponified ethylene-vinyl acetate copolymer of excellent gas barrier property or a multi-layered tubular film containing them as a layer of a core layer is preferred. Further, since the polyamide resin has a relatively good meat adhesion and Is readily corona treated, It Is used preferably for the inner surface layer, the outer surface layer or both inner layer and outer layer of the tubular film. As the multi-layered film, polyamide/vinylidene chloride resin/polyamide, polyolefin/vinylidene chloride resin/polyolefin, polyamide/saponified ethylene-vinyl acetate copolymer/polyamide, polyolefin/saponified ethylene-vinyl acetate copolymer/polyolefin, polyolefin/vinylidene chloride resin/polyamide are used preferably.

The tubular film is molded, for example, by a usual melt extrusion or inflation and it may be either a stretched or unstretched film.

For a better understanding of the invention and to show how the same may be carried into effect, reference will now be made, by way of example only, to the following drawing in which:

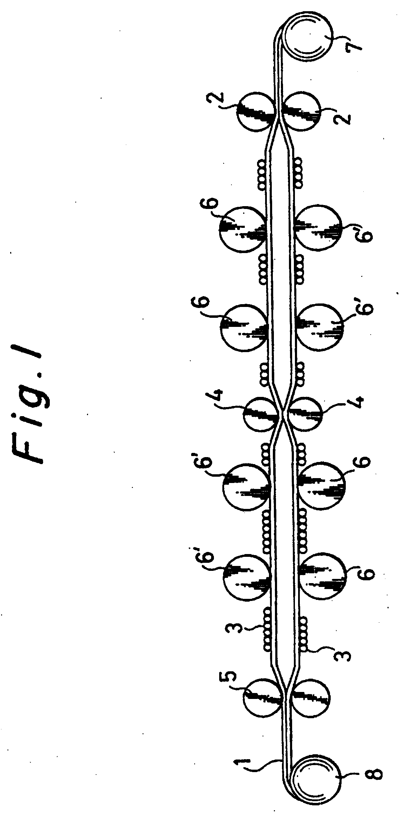

Fig. 1 is a schematic illustration of an example of a corona discharge treatment step of the present invention.

In Fig. 1, a delivery roll 7 for a tubular film and a take-up roll 8 are shown. A tubular plastic film 1 is passed between pinch rotters 2, 5 and an appropriate amount of gas is sealed by parting the pinch roller 5. Subsequently, pinch rollers 4 are pinched and the flatness of the tubular film is preferably controlled, for example, by retaining roller groups 3 so that the tube is not inflated extremely. The flatness of the tubular film may be adjusted by the roller group 3 as shown in Fig. 1, or it may be controlled forcibly by insulation members opposed to each other. By the sealing of air, an appropriate gap is formed between the inner surfaces of the tubular film and they are not brought into contact with each other. The distance between opposed electrode units is such a short distance as corona discharge is formed stably and is preferably from 2 to 6 mm. If the gap is too wide, electric power necessary for the treatment is increased and the corona treatment applied to the inner surfaces of the tube becomes insufficient. On the other hand, if it is too narrow, corona treatment applied to the inner surfaces tends to become not uniform when the tubular film runs at a high speed.

Fig. 1 shows an example of detivering a once taken-up tubular film and introducing it into the device shown in Fig. 1, but the device may be disposed, for example, between the folded state after inflation and a take-up step in the continuous production step of the tubular film. There is no particular restriction for the shape of a pair of electrode units, 6, 6′ used for the corona discharging treatment and it may be a rod or roll shape (rotational drum shape). The roll shape is preferred since it is advantageous for the running of the tube and the partial contact and spacing relative to the tube surface. Corona discharge is carried out between both of the electrode units 6 and 6′ by a'high voltage generation device (not illustrated in Fig. 1). It is a feature of the process in the present invention that both of at least a pair of discharging electrode unit and a grounding electrode unit constituting the present invention have a plurality of concavities at their surface, and they are formed so that the surface of the etectrode units is in contact with the outer-most layer of the tubular film. In the present invention, a pair of electrode units may be sufficient but treatment may be applied stepwise by disposing not less than two pairs, preferably, not less than four pairs of them (four pairs are illustrated in Fig. 1).

In a case of using not less than two pairs, it may be constituted so that each pair has a discharging electrode unit and a grounding electrode unit in an identical relation or in an opposite relationship. Alternatively, a pair may be disposed in a crossing relation to other pair.

In the present invention, both of a pair of discharging electrode unit and the grounding etectrode unit have a plurality of concavities at at their surfaces. The concavity preferably has a size of from 0.15 to 25 $mm^2$ and a depth of from 0.05 to 0.5 mm, and the surface of etectrode unit has preferably 3 to 300 concavities per 1 $cm^2$ on average. Since the surface of the electrode unit has appropriate concavities and an appropriate amount of gas for example, air is always present in a space between the outer surface of the tubular film and the surface of the metal electrode, a corona discharge treatment can be applied easily also to the outer surface of the tube. Further, since the outer surface of the tube is partially in contact with the electrode unit, the Inner surface of the tube can be easily applied with the corona treatment sufficiently in this state. As described above, when the outer surface of the tubular film and the etectrode are in full contact with each other, although the inner surface of the tubular film can be corona treated, the outer surface of the tube is less treated upon corona discharge. On the other hand, if the tubular film is spaced apart from the electrode, although the outer surface of the tube can be treated, the inner surface can not be treated effectively.

In the present invention, since a plurality of concavities are formed at the surface of both of the pair of electrodes unit, corona discharge is applied while the electrode unit is partially in contact with or spaced apart from the tube, so that the inner and the outer surfaces of the tubular film can be treated at the same time.

The plurality of the concavities may be formed on the electrode unit by a method of merely fabricating a metal material using a casting die or by cutting. Further, since formation of the concavities corresponds, in principle, to the formation of convexities , a method of forming convexities may also be used. With the following reason, the electrode is preferably covered uniformly with a woven fabric or mesh-like product made of insulators on the surface along a metal electrode, for example, a roll-shaped metal electrode. In the electrode unit which the surface of metal electrode is covered with insulator and concavities or convexities are formed, corona discharge is formed sufficiently in concavities as well as convexities. On the other hand, in the electrode unit which the metal surface is fabricated or is covered with mesh-like product of electric conductive material, corona discharge tends to generate from convexities more than concavities and in concavities which film and electrode unit are apart, corona discharge on the outer surface of film tends to be insufficient compared with electrode unit covered with insulators.

As the woven fabric or mesh-like product, those made of a fluoro resin, polyamide resin and glass fiber are preferred. The woven fabric or the mesh-like product has an appropriate gap as a cloth stitch or mesh. Since the gap corresponds to the concavities described above, it preferably has the size and the density of the concavities described above. As the woven fabric or the mesh-like product, those having openings 0.25 to 25 $mm^2$, 4 - 25 of mesh number/inch, a fiber diameter of 50 to 1,000 $\mu m$, an opening area ratio of 12 to 83% and a thickness of 0.1 to 1.5 mm are preferably used.

Any of gases may be sealed in the tubular film and, for example, $N_2$, helium or argon is used.

A high voltage used for corona discharge preferably has a voltage usually at 20 - 40 kV and a frequency of 5 to 50 kHz, and the electric power applied and the running speed are controlled so that the discharging amount to the film is from 50 to 600 W/m/min as a whole.

In the present invention, since corona discharge is applied between at least one pair of opposing electrode units disposed at a predetermined gap and having a plurality of concavities at their surfaces and a tubular plastic film having a gas sealed therein run between the electrode units while being in contact at the outer surface of the film with the electrode unit, the outer surface and the inner surface of the tube are simultaneously corona-treated under the effect of the gas present in the concavities of the electrode unit and the gas in the tube. Accordingly, a plastic film useful as a food packaging film having excellent adhesion to meat at the inner surface and printability at the outer surface of the film can be obtained easily even under such a high speed treatment.

The present invention will now be described specifically referring to examples but the present invention is not restricted only to such examples.

The method for evaluating the tubular film is shown below.

A. Method for judging the effect of the corona treatment

by the adhesion amount of meat: After filling pressed ham in a tubular film and setting to a retainer, a boiling treatment was applied at 75°C × 3.5 hrs, and then the ham was taken out from the retainer after cooling in a refrigerator at 5°C, and the adhesion amount of meat was measured.

Pressed ham composition: 10 parts of water, 2.0 parts of table salt, 0.6 parts of curing agent, 1.5 parts of potato starch and 0.4 parts of vitamin C based on 100 parts of pork meat (each parts by weight).

The pressed ham applied with the bolting treatment was diametrically cut to a 10 cm length and the film on the surface was peeled off at a speed of about 1 cm/sec and the adhesion amount of meat was determined based on the calculation in accordance with the following equation:

$$\text{Adhesion amount of meat} = (W_1 - W_2)/(\text{film area}) \ (mg/cm^2)$$

in which $W_1$ is the entire weight of the film adhered with meat and $W_2$ is a weight of the film measured after removing the adhered meat.

B. Method for judging the effect of corona treatment by the adhesion amount of albumin: After filling a mixed solution comprising 100 parts by weight of an aqueous 25% solution of dried egg white and 100 parts by weight of a wheat powder as a sample into a tubular film, it was applied with a boiling treatment at 90°C × 30 min, and the film after cooling over night in a refrigerator at 5°C, was cut into 5 cm square. Then the film was peeled off and the adhesion amount of albumin was evaluated in the same procedures as those for the meat adhesion amount.

C. Contact angle: The contact angle was measured by using a contact angle measuring instrument manufactured by Egma Co. In the method, when a drop of liquid is put on a smooth surface of a solid, a liquid droplet stays stationary in a constant form. In a view field of a camera, a tangential line is drawn at the end of the liquid droplet, and the angle between the tangential line and the solid-liquid interface, i.e., contact angle is measured.

Smaller contact angle shows that the corona treatment is applied more effectively.

D. Evaluation for the separation of meat juice: After filling and boiling meat, presence or absence of accumulated meat juice between the inner surface of the film and the surface of meat was observed with naked eyes. "-" means the presence of accumulated meat juice, white "+" means absence of accumulated meat juice.

E. Printability: Solid printing is applied to the surface of the treated film with a white ink 709, XS-444 (hardener, CVL hardener #10, manufactured by Dai Nippon Ink Co.) in a case where the outer layer is made of a polyamide resin and with a red ink 320 H, XA-55 (manufactured by Sakata Inks, Co.) in a case of ethylene-vinyl acetate copolymer resin and, after drying, it is peeled off with adhesive tape, and the printability is shown by five steps as the ratio of ink adhered to the tape.

5 : Ink does not peel at all
4 : A slight portion of ink is peeled
3 : The peeled portion of ink is less than 25%
2 : The peeled portion of ink is from 25 to 50%
1 : The peeled portion of ink is not less than 50% Printability for 3 or less is not practical.

Example 1

A gap between electrode units (roll electrodes made of iron) 6,6′ each of 45 cm length and 10cm diameter and covered at the surface thereof with a glass cloth of a mesh size of 4.23 mm, a mesh number/inch of 5, a fiber diameter of 850 µm, an opening area of 70% and a thickness of 850 µm (L640-5, manufactured by Tokyo Gijutsu Kenkyujo) was controlled to 3 mm and 4 pairs of such electrode units were arranged at a 40 cm interval in parallel to constitute a treating device. An unstretched multi-layered tubular plastic film 1 (folded width: 150 mm, thickness: 37 µm) comprising an outer layer of 6-66 copolyamide (thickness: 14 µm), a core layer of a vinylidene chloride resin (vinylidene chloride-vinyl chloride copolymer, weight ratio: 82 : 18, thickness 7 µm) and an inner layer of 6-12 copolyamide (thickness: 14 µm) in which each of the layers was bonded by means of an adhesive layer (thermoplastic polyurethane) was passed through pinch rollers 2, 5, then the pinch roller 5 was opened to seal a appropriate amount of air and closed. Each of the electrode units was disposed so that the electrode unit 6 constitutes the discharging electrode unit and the electrode unit 6′ constitutes a grounding electrode unit. Subsequently, the pinch roller 4 was pinched and the flatness of the tubular film was adjusted by a retaining roller group 3, and the outer layer of the multi-layered film was brought into contact with the glass cloth on each of the electrode units spaced apart by 3 mm. Subsequently, the pinch rollers 2, 4, 5 were driven to cause the tubular film to run, and a high frequency high voltage was applied between the electrode unit to generate corona discharge. The voltage applied was 40 kV, the frequency was 5 kHz and the running speed was 25 m/min. The amount of discharge to the film was 550 W/m/min. Table 1 shows the result for the evaluation of the resultant tubular film simultaneously treated for both of the inner and the outer surfaces.

Example 2

The same multi-layered film as in Example 1 was applied with a corona treatment by the same device and the method as those in Example 1 excepting that both of the electrode units were covered with a Teflon (TM) mesh with a mesh size of 850 µm, a mesh number/inch of 22, a fiber diameter of 270 µm, an opening area of 57.5% and thickness of 685 µm. In this case, the applied voltage was 40 kV, the frequency was 5 kHz, the running speed was 25 m/min and the amount of discharge to the film was 300 W/m/min.

Example 3

The same multi-layered film as in Example 2 was applied with a corona treatment using the same electrode unit as in Example 2 and in same device and method as in Example 2. However, the running speed was 25 m/min, and the electric power applied was controlled so that the amount of discharging to the film was 550 W/m/min.

Example 4

A corona treatment was applied by substantially the same device and method as in Example 2 except for using an unstretched multi-layered tubular plastic film (folding width: 250 mm, thickness: 56 μm) comprising an outer layer of an ethylene-vinyl acetate copolymer resin (ethylene content: 75%, thickness: 14 μm), a core layer of a saponified ethylene-vinyl acetate copolymer (ethylene content: 44%, saponification degree: 99.5%, thickness: 5 μm) and an inner layer of an ionomer resin (thickness: 32 μm) in which each of the layers was bonded by an adhesive layer (ethylene-ethyl acrylate copolymer, ethyl acrylate content: 15%) as the multi-layered plastic film. The discharging amount to the film was 550 W/m/min. The results of evaluation in Examples 2 - 4 are shown in Table 1.

Comparative Example 1 - 2

Results of evaluation for the case in which the multi-layered tubular film used in Example 1 and the multi-layered tubular film used in Example 4 were not applied with the corona treatment are shown in Table 1. Comparative Example 1 is for the film used in Example 1 and the Comparative Example 2 is for the film used in Example 4.

Comparative Example 3

A corona treatment was applied substantially by the same method as in Example 1 except for applying the corona treatment while removing the glass cloth covers on the electrode units 6, 6′ and applying the corona treatment so that the metal surface of the electrode units were in direct contact with the outer layer of the multi-layered tubular film. The apptied voltage and the running speed were controlled so that the discharging amount was 550 W/m/min.

Comparative Example 4

A corona treatment was applied substantially by the same method as in Example 4 except for applying the corona treatment white removing the glass cloth cover on the electrode units 6, 6′ and applying the corona treatment so that the metal surface of the electrode units were in direct contact with the outer layer of the multi-layered tubular film. The applied voltage and the running speed were controlled such that the discharging amount was 550 W/m/min.

The results of the evaluation for Comparative Examples 1 to 4 are shown in Table 1.

It can be seen from Examples 1 to 4 that the corona treatment was applied effectively to the inner surface and the outer surface of the tubular plastic film by the method according to the present invention. On the contrary, in a case where corona discharge was applied in a state where both of the discharging etectrode and the grounding electrode are in direct contact with the outer layer of the film, although the inner surface of the film was corona-treated effectively, the treatment was not applied effectively sufficient for the outer surface and, accordingly, the printability of the outer surface was not sufficient, as can be seen from Comparative Examples 3 and 4.

Table 1

| | Contact angle (degree) | | Adhesion amount of albumin | | Adhesion amount of meat $(mg/cm^2)$ inner surface | Separation of meat juice inner surface | Printability outer surface |
|---|---|---|---|---|---|---|---|
| | inner surface | outer surface | inner surface | outer surface | | | |
| Example 1 | 67 | 66 | 1.05 | 1.12 | 2.40 | - | 5 |
| Example 2 | 70 | 67 | 0.82 | 1.01 | 2.10 | - | 5 |
| Example 3 | 67 | 68 | 0.92 | 1.18 | 2.25 | - | 5 |
| Example 4 | 50 | 72 | 1.50 | 1.08 | 2.00 | - | 4 |
| Comparative example 1 | 81 | 80 | 0.01 | 0.04 | 1.67 | + | 3 |
| Comparative example 2 | 80 | 84 | 0.81 | 0.02 | 0.12 | + | 1 |
| Comparative example 3 | 65 | 78 | 1.00 | 0.50 | 1.69 | - | 3 |
| Comparative example 4 | 70 | 84 | 1.50 | 0.04 | 1.98 | - | 1 |

## Claims

1. A process for treating a tubular plastic film (1) by corona discharge, in which the tubular plastic film (1) having a gas retained therein, such that the inner surfaces of the film in at least one portion are not in contact, is run between at least one pair of opposite electrode units (6, 6') having a predetermined gap therebetween wherein the film is brought into contact with the electrode units (6, 6') and each electrode unit is a roll-shaped electrode unit and the predetermined gap is from 2 to 6 mm, wherein the electrode units (6, 6') include a plurality of pocket recesses or concavities at their surface and each electrode unit is uniformly covered at the surface thereof with a woven fabric or mesh-like product made of insulators, and wherein the inner and outer surfaces of the film are simultaneously treated by corona discharge.

2. A process according to claim 1 wherein the tubular plastic film is a multi-layered film having a vinylidene chloride resin layer or a saponified ethylene-vinyl acetate copolymer layer, as a core layer, and having a polyamide resin as at least an inner or outer layer.

## Patentansprüche

1. Verfahren zur Behandlung einer Kunststoff-Schlauchfolie (1) durch Coronaentladung, wobei die Kunststoff-Schlauchfolie (1), die ein darin eingeschlossenes Gas enthält, so daß die inneren Oberflächen der Folie in mindestens einem Teil nicht miteinander in Kontakt stehen, zwischen mindestens einem Paar von gegenüber angeordneten Elektrodeneinheiten (6,6'), die einen vorbestimmten Abstand haben, bewegt wird, wobei die Folie mit den Elektrodeneinheiten (6, 6') in Kontakt gebracht wird, jede Elektrodeneinheit eine rollenförmige Elektrodeneinheit ist und der vorbestimmte Abstand 2 bis 6 mm beträgt, wobei die Elektrodeneinheiten (6, 6') auf ihrer Oberfläche eine Vielzahl von taschenförmigen Vertiefungen oder Einbuchtungen aufweisen und die Oberfläche jeder Elektrodeneinheit gleichmäßig mit einem Stoff oder einem siebähnlichen Produkt aus Isoliermaterial bedeckt ist und wobei die inneren und äußeren Oberflächen der Folie gleichzeitig durch Coronaentladung behandelt werden.

2. Verfahren gemäß Anspruch 1, wobei die Kunststoff-Schlauchfolie eine Mehrschichtfolie mit einer Vinylidenchlorid-Harzschicht oder einer Schicht eines verseiften Ethylen-Vinylacetat-Copolymeren als Kernschicht und mit einem Polyamidharz als mindestens eine innere oder äußere Schicht ist.

**Revendications**

1. Traitement pour traiter un film tubulaire en plastique (1) par décharge corona, où le film tubulaire en plastique (1), ayant un gaz maintenu à l'intérieur, pour que les surfaces internes du film dans au moins une partie ne soient pas en contact, passe entre au moins une paire d'unités d'électrode opposées (6, 6') ayant un espace prédéterminé entre elles où le film est mis en contact avec les unités d'électrode (6, 6') et chaque unité d'électrode est une unité d'électrode en forme de rouleau et l'espace prédéterminé est de 2 à 6 mm, où les unités d'électrode (6, 6') comprennent une pluralité de cavités ou de concavités sur leurs surfaces et chaque unité d'électrode est uniformément recouverte sur la surface de celle-ci par un produit de fibre ou ressemblant à des mailles constituées par des isolateurs, et où les surfaces interne et externe du film sont simultanément traitées par décharge par effet corona.

2. Traitement selon la revendication 1 dans lequel le film tubulaire en plastique est un film multicouche ayant une couche de résine de chlorure de vinylidène ou une couche copolymère d'acétate d'éthylènevinyle saponifiée, comme couche intermédiaire, et ayant une résine polyamide au moins comme couche interne ou couche externe.

Fig.1

EP 0 510 891 B1